# EUROPÄISCHE PATENTSCHRIFT

(11) **EP 1 077 226 B1**
(45) Veröffentlichungstag und Bekanntmachung des Hinweises auf die Patenterteilung: **23.01.2002**
(21) Anmeldenummer: 00114997.0
(22) Anmeldetag: 21.07.2000
(51) Int. Cl.: C08K 5/00, C08K 5/56, C08L 83/04, C07F 15/00, B01J 31/22

(54) **Härtbare Organopolysiloxanmassen**
Curable Polysiloxane Compositions
Compositions d'organopolysiloxanes durcissables

(30) Priorität: 13.08.1999 DE 19938338
(43) Veröffentlichungstag der Anmeldung: 21.02.2001
(73) Patentinhaber: Wacker-Chemie GmbH, 81737 München (DE)
(72) Erfinder: Fehn, Armin, Dr., 84547 Emmerting (DE); Achenbach, Frank Dr., 84359 Simbach (DE)
(74) Vertreter: Budczinski, Angelika

(56) Entgegenhaltungen:
- EP-A- 0 173 512
- EP-A- 0 982 370
- EP-A- 0 994 159
- US-A- 5 328 974

## Beschreibung

Die vorliegende Erfindung betrifft durch Anlagerung von Si-gebundenem Wasserstoff an aliphatische Kohlenstoff-Kohlenstoff-Mehrfachbindung vernetzbare Siliconmassen, Verfahren zu deren Herstellung, hierzu eingesetzte Platinkatalysatoren sowie die Verwendung der vernetzbaren Massen.

Additionsvernetzende Siliconmassen vernetzen durch Reaktion aliphatisch ungesättigter Gruppen mit Si-gebundenem Wasserstoff (Hydrosilylierung) in Gegenwart eines Katalysators, typischerweise einer Platin-Verbindung. Aufgrund der Tatsache, daß bei gleichzeitigem Vorliegen der essentiellen Bestandteile die Vernetzungsreaktion einsetzt, werden additionsvernetzende Siliconmassen bisher nahezu ausschließlich als zweikomponentige Formulierungen hergestellt, wobei die Zusammensetzung der einzelnen Komponenten so beschaffen ist, daß erst nach deren Vermischen alle drei essentiellen Bestandteile zusammen vorliegen. Üblicherweise enthält eine der Komponenten das alkenylfunktionelle Polyorganosiloxan und den Platin-Katalysator, die andere Komponente den SiH-funktionellen Vernetzer ggf. in Kombination mit dem alkenylfunktionellen Polyorganosiloxan. Nach Vermischen der einzelnen Komponenten kann die vollständige Aushärtung zum Siliconelastomer bei Raumtemperatur erfolgen, wird jedoch üblicherweise bei erhöhter Temperatur durchgeführt.

Das Zwei-Komponenten-System bei additionsvernetzbaren Siliconmassen ist mit zahlreichen Nachteilen verbunden, wie etwa Logistik, die hohe Kontaminationsgefahr durch Platinspuren und die Tatsache eines zusätzlichen Mischungsschrittes. Nach Vermischen der Komponenten wird zwar eine gebrauchsfertige Masse erhalten, doch weist diese nur eine eng begrenzte Topfzeit bei Raumtemperatur auf. Dies macht einerseits eine sich rasch anschließende Verarbeitung erforderlich, andererseits auch ein häufiges Reinigen der Vorratsbehälter, Dosieranlagen, Verarbeitungsmaschinen etc., da das z.B. durch Rückvermischung oder Wandhaftung verbleibende Material schließlich vergelt.

Aufgrund der genannten Nachteile hat es nicht an Versuchen gefehlt, auch additionsvernetzende Siliconmassen als einkomponentige Formulierung (1K-System) zur Verfügung zu stellen. Da im Fall eines 1K-Systems alle zur Vernetzung notwendigen Bestandteile gemeinsam vorliegen, besteht das Problem grundsätzlich darin, ein vorzeitiges Einsetzen der Vernetzungsreaktion, die normalerweise auch bei Raumtemperatur abläuft, anderweitig zu unterbinden. Möglichkeiten zur gezielten Einstellung (Verlängerung) der Topfzeit einer additionsvernetzenden Masse sind hinlänglich bekannt, z.B. durch die Verwendung von Inhibitoren, welche die Aktivität des Platinkatalysators bei Raumtemperatur erheblich herabzusetzen vermögen, wie beispielsweise Phosphorverbindungen in Kombination mit Peroxiden gemäß US-A-4 329 275 oder Azodicarbonylverbindungen gemäß EP-A-490 523. Durch Art und Gehalt solcher Inhibitoren kann die Topfzeit zwar an sich beliebig verlängert werden, doch ist mit zunehmender Topfzeit auch eine nachteilige Beeinflussung des Vernetzungsverhaltens untrennbar verbunden. Dies gilt insbesondere dann, wenn die Topfzeit durch hohe Inhibitorgehalte auf mehrere Monate ausgedehnt wird: erhöhte Anspringtemperatur, niedrige Vernetzungsgeschwindigkeit bis hin zur Untervernetzung sind die Folge.
Eine davon grundsätzlich verschiedene, weitere Möglichkeit besteht darin, den Platinkatalysator in einem feinteiligen Material zu verkapseln, welches erst bei erhöhter Temperatur das Platin freisetzt. Dies kann beispielsweise durch Mikroverkapselung des Platinkatalysators mit einem thermoplatischen Siliconharz oder einem organischen Thermoplast erfolgen, wie etwa in EP-A-363 006 beschrieben, was jedoch relativ aufwendig ist. Eine dritte Möglichkeit besteht darin, als Katalysator spezielle Platin-Komplexe auszuwählen, deren Aktivität so beschaffen ist, daß zwar bei erhöhter Temperatur die Hydrosilylierungsreaktion hinreichend schnell abläuft, bei Raumtemperatur jedoch in solch geringem Maße, daß Topfzeiten von mehreren Monaten erzielt werden. Derartige Platin-Komplexe enthaltende additionsvernetzende Massen wurden beispielsweise in EP-A-583 159 und DE-A-36 35 236 beschrieben. Obgleich die beschriebenen Massen deutlich verbesserte Topfzeiten bei teils hinreichend hohen Vernetzungsgeschwindigkeiten aufweisen, besteht weiterhin Bedarf, durch leistungsfähigere Platinkatalysatoren die Topfzeit und Vernetzungsgeschwindigkeit, insbesondere einkomponentig formulierter, additionsvernetzender Massen, zu verbessern, ohne die o.g. Nachteile in Kauf nehmen zu müssen.

Gegenstand der vorliegenden Erfindung sind härtbare Organopolysiloxanmassen, enthaltend
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen oder anstelle von (A) und (B)
(C) Organopolysiloxane, die SiC-gebundene Reste mit aliphatischen Kohlenstoff-Kohlenstoff-Mehrfachbindungen und Si-gebundene Wasserstoffatome aufweisen, und
(D) Platinkatalysator, ausgewählt aus der Gruppe bestehend aus Verbindungen der Formel 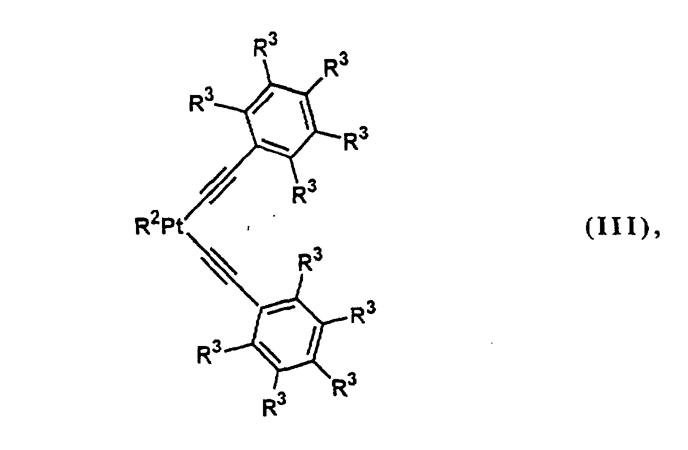
und/oder oligomeren oder polymeren Verbindungen, die aus Struktureinheiten der allgemeinen Formel 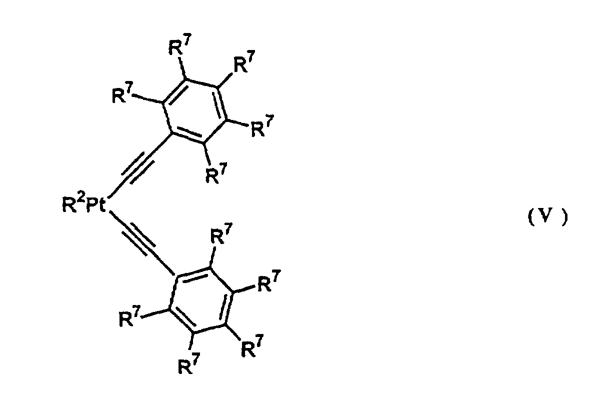 und gegebenenfalls Struktureinheiten der allgemeinen Formel

R⁹ᵣSiO_{(4-r)/2} (VI)

zusammengesetzt sind,
wobei
- **R**^{**2**}: ein gegebenenfalls substituiertes Dien bedeutet, das durch mindestens eine π-Bindung mit Platin verbunden ist und eine unverzweigte oder eine verzweigte Kette mit 4 bis 18 Kohlenstoffatomen oder einen cyclischen Ring mit 6 bis 28 Kohlenstoffatomen darstellt,
- **R**^{**3**}: gleich oder verschieden sein kann und Wasserstoffatom, Halogenatom, -SiR⁴₃, -OR⁶ oder einwertige, gegebenenfalls substituierte Kohlenwasserstoffreste mit 1 bis 24 Kohlenstoffatomen bedeutet, mit der Maßgabe, daß in den Verbindungen der Formel (III) mindestens ein Rest R³ die Bedeutung von -SiR⁴₃ hat,
- **R**^{**4**}: gleich oder verschieden sein kann und Wasserstoff, Halogenatom, -OR⁶ oder einwertige, gegebenenfalls substituierte Kohlenwasserstoffreste mit 1 bis 24 Kohlenstoffatomen bedeutet,
- **R**^{**6**}: gleich oder verschieden sein kann und Wasserstoffatom, -SiR⁴₃ oder ein einwertiger gegebenenfalls substituierter Kohlenwasserstoffrest mit 1 bis 20 Kohlenstoffatomen ist,
- **R**^{**7**}: gleich oder verschieden sein kann und Wasserstoffatom, Halogenatom, -SiR⁴₃, -SiR⁴₍₃₋ₜ₎[R⁸SiR⁹ₛO_{(3-s)/2}]ₜ, -OR⁶ oder einwertige, gegebenenfalls substituierte Kohlenwasserstoffreste mit 1 bis 24 Kohlenstoffatomen bedeutet, mit der Maßgabe, daß in Formel (V) mindestens ein Rest R⁷ die Bedeutung von -SiR⁴₍₃₋ₜ₎[R⁸SiR⁹ₛO_{(3-s)/2}]ₜ hat,
- **R**^{**8**}: gleich oder verschieden sein kann und Sauerstoff oder zweiwertige, gegebenenfalls substituierte Kohlenwasserstoffreste mit 1 bis 24 Kohlenstoffatomen, die über Sauerstoffatom an das Silicium gebunden sein können, bedeutet,
- **R**^{**9**}: gleich oder verschieden sein kann und Wasserstoff oder einen organischen Rest bedeutet,
- r: 0, 1, 2 oder 3 ist,
- s: 0, 1, 2 oder 3 bedeutet und
- t: 1, 2 oder 3 ist.

Im Rahmen der vorliegenden Erfindung sollen von dem Begriff Organopolysiloxane sowohl polymere, oligomere wie auch dimere Siloxane mitumfaßt werden.

Falls es sich bei R² um ein substituiertes Dien bzw. bei den Resten R³, R⁴, R⁵, R⁶, R⁷ und R⁸ um substituierte Kohlenwasserstoffreste handelt, sind als Substituenten Halogenatome, wie F, Cl, Br und J, Cyanoreste, -NR⁶₂, Heteroatome, wie O, S, N und P, sowie Gruppen -OR⁶ bevorzugt, wobei R⁶ die oben genannte Bedeutung hat.

Bei den erfindungsgemäßen Zusammensetzungen kann es sich um Einkomponenten-Organopolysiloxanmassen wie auch um Zweikomponenten-Organopolysiloxanmassen handeln. In letzterem Fall können die beiden Komponenten der erfindungsgemäßen Massen alle Bestandteile in beliebiger Kombination enthalten, im allgemeinen mit der Maßgabe, daß eine Komponente nicht gleichzeitig Siloxane mit aliphatischer Mehrfachbindung, Siloxane mit Si-gebundenem Wasserstoff und Katalysator, also im wesentlichen nicht gleichzeitig die Bestandteile (A), (B) und (D) bzw. (C) und (D), enthält. Vorzugsweise handelt es sich bei den erfindungsgemäßen Zusammensetzungen um Einkomponenten-Massen.

Die in den erfindungsgemäßen Massen eingesetzten Verbindungen (A) und (B) bzw. (C) werden bekanntermaßen so gewählt, daß eine Vernetzung möglich ist. So weist beispielsweise Verbindung (A) mindestens zwei aliphatisch ungesättigte Reste auf und Siloxan (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den obengenannten Verhältnissen aufweist.

Bei der erfindungsgemäß eingesetzten Verbindung (A) kann es sich auch um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln. Beispiele für organische Verbindungen, die in den erfindungsgemäßen Massen als Komponente (A) eingesetzt werden können, sind 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicycio[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5) und 4,5-Dimethyl-4,5-diethyl-octadien(1,7), N,N'-Methylen-bis-(acrylsäureamid), 1,1,1-Tris(hydroxymethyl)-propan-triacrylat, 1,1,1-Tris(hydroxymethyl)-propantrimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykol Diacrylat, Polyethylenglykol Dimethacrylat, Poly-(propylenglykol)methacrylat.

Vorzugsweise enthalten die erfindungsgemäßen Siliconmassen als Bestandteil (A) jedoch eine aliphatisch ungesättigte Organosiliciumverbindung, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der Formel

RₐR¹_{b}SiO_{(4-a-b)/2} (I)

eingesetzt, wobei
**R** gleich oder verschieden sein kann und einen von aliphatischen Kohlenstoff-Kohlenstoff-Mehrfachbindungen freien, organischen Rest bedeutet,
**R**^{**1**} gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
**a** 0, 1, 2 oder 3 ist und
**b** 0, 1 oder 2 ist
mit der Maßgabe, daß die Summe a + b kleiner oder gleich 3 ist und im Durchschnitt mindestens 2 Reste R¹ je Molekül vorliegen.

Bei Rest **R** kann es sich um ein- oder mehrwertige Reste handeln, wobei die mehrwertigen Reste, wie bivalente, trivalente und tetravalente Reste, dann mehrere, wie etwa zwei, drei oder vier, Siloxy-Einheiten der Formel (I) miteinander verbinden.

R umfaßt die einwertigen Reste -F, -Cl, -Br, -OR⁶, -CN, -SCN, -NCO und SiC-gebundene, gegebenenfalls substituierte Kohlenwasserstoffreste, die mit Sauerstoffatomen oder der Gruppe -C(O)- unterbrochen sein können, sowie zweiwertige, beidseitig gemäß Formel (I) Si-gebundene Reste.

Falls es sich bei Rest **R** um SiC-gebundene, substituierte Kohlenwasserstoffreste handelt, sind als Substituenten Halogenatome, phosphorhaltige Reste, Cyanoreste, -OR⁶, -NR⁶-, -NR⁶₂, -NR⁶-C(O)-NR⁶₂, -C(O)-NR⁶₂, -C(O)-R⁶, -C(O)OR⁶, -SO₂-Ph und -C₆F₅ mit R⁶ gleich der obengenannten Bedeutung und Ph gleich Phenylrest bevorzugt.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der ß-Phenylethylrest.

Beispiele für substituierte Reste **R** sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, -(CH₂)ₙ-N(R⁶)C(O)NR⁶₂, -(CH₂)ₙ-C(O)NR⁶₂, -(CH₂)ₙ-C(O)R⁶, -(CH₂)ₙ-C(O)OR⁶, -(CH₂)ₙ-C(O)NR⁶₂, -(CH₂)ₙ-C(O)-(CH₂)ₘ-C(O)CH₃, -(CH₂)ₙ-NR⁶-(CH₂)ₘ-NR⁶₂, -(CH₂)ₙ-O-CO-R⁶, -(CH₂)ₙ-O-(CH₂)ₘ-CH(OH)-CH₂OH, -(CH₂)ₙ-(OCH₂CH₂)ₘ-OR⁶, -(CH₂)ₙ-SO₂-Ph und - (CH₂)ₙ-O-C₆F₅, wobei R⁶ eine oben dafür angegebene Bedeutung hat, n und m gleiche oder verschiedene ganze Zahlen zwischen 0 und 10 sind und Ph den Phenylrest bezeichnet.

Beispiele für **R** gleich zweiwertige, beidseitig gemäß Formel (I) Si-gebundene Reste sind solche, die sich von den voranstehend für Rest R genannten einwertigen Beispiele dadurch ableiten, daß eine zusätzliche Bindung durch Substitution eines Wasserstoffatoms erfolgt. Beispiele für derartige Reste sind -(CH₂)ₙ-, -CH(CH₃)-, -C(CH₃)₂-, -CH(CH₃)-CH₂-, -C₆H₄-, -CH(Ph)-CH₂-, -C(CF₃)₂-, -(CH₂)ₙ-C₆H₄-(CH₂)ₙ-, -(CH₂)ₙ-C₆H₄-C₆H₄-(CH₂)ₙ-, -(CH₂O)ₘ-, -(CH₂CH₂O)ₘ-, -(CH₂)ₙ-Oₓ-C₆H₄-SO₂-C₆H₄-Oₓ-(CH₂)ₙ-, wobei x 0 oder 1 ist, m und n die voranstehend genannte Bedeutung haben sowie Ph gleich Phenylrest ist.

Bevorzugt handelt es sich bei Rest **R** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest **R**^{**1**} kann es sich um beliebige, einer Anlagerungsreaktion (Hydrosilylierung) mit einer SiH-funktionellen Verbindung zugängliche Gruppen handeln.

Falls es sich bei Rest **R**^{**1**} um SiC-gebundene, substituierte Kohlenwasserstoffreste handelt, sind als Substituenten Halogenatome, Cyanoreste und -OR⁶ bevorzugt, wobei R⁶ die obengenannte Bedeutung hat.

Bevorzugt handelt es sich bei Rest **R**^{**1**} um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R¹R₂SiO_{1/2}, R¹RSiO_{2/2} und R₂SiO_{2/2} zusammengesetzt, wobei R und R¹ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R¹SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Als Organosiliciumverbindung (B) können alle hydrogenfunktionellen Organosiliciumverbindungen eingesetzt werden, die auch bisher in additionsvernetzbaren Massen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der Formel

R_{c}H_{d}SiO_{(4-c-d)/2} (II)

eingesetzt, wobei
**R** gleich oder verschieden sein kann und die oben angegebene Bedeutung hat,
**c** 0, 1, 2 oder 3 ist und
**d** 0, 1 oder 2 ist,
mit der Maßgabe, daß die Summe von c + d kleiner oder gleich 3 ist und im Mittel mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, HSiO_{3/2} und SiO_{4/2} bevorzugt sind. Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiH-funktioneller Verbindungen, wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Silicongesamtmassen enthalten, daß das Molverhältnis von SiH-Gruppen zu aliphatisch ungesättigten Gruppen bei 0,1 bis 20, besonders bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Massen Organopolysiloxane (C), die aliphatische Kohlenstoff-Kohlenstoff-Mehrfachbindungen und Si-gebundene Wasserstoffatome aufweisen, enthalten, was jedoch nicht bevorzugt ist.

Falls Siloxane (C) eingesetzt werden, handelt es sich vorzugsweise um solche aus Einheiten der Formel

R_{g}SiO_{4-g/2} , RₕR¹SiO_{3-h/2} und RᵢHSiO_{3-i/2},

wobei R und R¹ die oben dafür angegebene Bedeutung haben,
g 0, 1, 2 oder 3 ist,
h 0, 1 oder 2 ist und
i 0, 1 oder 2 ist,
mit der Maßgabe, daß je Molekül mindestens 2 Reste R¹ und mindestens 2 Si-gebundene Wasserstoffatome vorliegen.

Beispiele für Organopolysiloxane (C) sind solche aus SiO_{4/2}-, R₃SiO_{1/2}-, R₂R¹SiO_{1/2}- und R₂HSiO_{1/2}-Einheiten, sogenannte MQ-Harze, wobei diese Harze zusätzlich RSiO_{3/2}- und R₂SiO-Einheiten enthalten können, sowie lineare Organopolysiloxane im wesentlichen bestehend aus R₂R¹SiO_{1/2}-, R₂SiO- und RHSiO-Einheiten mit R und R¹ gleich der obengenannten Bedeutung.

Die Organopolysiloxane (C) besitzen vorzugsweise eine durchschnittliche Viskosität von 0,01 bis 500 000 Pa.s, besonders bevorzugt 0,1 bis 100 000 Pa·s, jeweils bei 25°C.

Organopolysiloxane (C) sind nach in der Chemie gängigen Methoden herstellbar.

Beispiele für **R**^{**2**} sind Diene, wie 1,3-Butadien, 1,4-Diphenyl-1,3-butadien, 1,3-Cyclohexadien, 1,4-Cyclohexadien, 2,4-Hexadien, 1,4-Hexadien, 1,5-Hexadien, 2,5-Dimethyl-2,4-Hexadien, α-und γ-Terpinen, (R)-(+)-4-Isopropenyl-1-methyl-1-cyclohexen, (S)-(-)-4-Isopropenyl-1-methyl-1-cyclohexen, 4-Vinyl-1-cyclohexen, 2,5-Heptadien, 1,5-Cyclooctadien, 1-Chlor-1,5-Cyclooctadien, 1,5-Dimethyl-1,5-cyclooctadien, 1,6-Dimethyl-1,5-cyclooctadien, 1,5-Dichlor-1,5-cyclooctadien, 5,8-Dihydro-1,4-dioxocin, η⁴-1,3,5,7-Cyclooctatetraen, η⁴-1,3,5-Cycloheptatrien, η⁴-1-Fluor-1,3,5,7-Cyclooctatetraen, η⁴-1,2,4,7-Tetramethyl-1,3,5,7-cyclooctatetraen, 1,8-Cyclotetradekadien, 1,9-Cyclohexadecadien, 1,13-Cyclotetracosadien, η⁴-1,5,9-Cyclododekatrien, η⁴-1,5,10-Trimethyl-1,5,9-cyclododekatrien, η⁴-1,5,9,13-Cyclohexadecatetraen, Bicyclo[2.2.1]hepta-2,5-dien, 1,3-Dodecadien, Methylcyclopentadien dimer, 4,7-Methylen-4,7,8,9-tetrahydroinden, Bicyclo[4.2.2]deca-3,9-dien-7,8-dicarbonsäureanhydrid, Bicyclo[4.2.2]deca-3,9-dien-7,8-dicarbonsäurealkylester und Bicyclo[4.2.2]deca-3,7,9-trien-7,8-dicarbonsäurealkylester.

Bevorzugt handelt es sich bei Dien **R**^{**2**} um 1,5-Cyclooctadien, 1,5-Dimethyl-1,5-cyclooctadien, 1,6-Dimethyl-1,5-Cyclooctadien, 1-Chlor-1,5-Cyclooctadien, 1,5-Dichlor-1,5-Cyclooctadien, 1,8-Cyclotetradekadien, 1,9-Cyclohexadecadien, 1,13-Cyclotetracosadien, Bicyclo[2.2.1]hepta-2,5-dien, 4-Vinyl-1-cyclohexen, und η⁴-1,3,5,7-cyclooctatetraen, wobei 1,5-Cyclooctadien, Bicyclo[2.2.1]hepta-2,5-dien, 1,5-Dimethyl-1,5-cyclooctadien, 1,6-Dimethyl-1,5-cyclooctadien besonders bevorzugt sind. Beispiele für **R**^{**3**} sind Alkylreste, wie der Methyl-, Ethyl-, n-Propyl-, iso-Propyl-, 1-n-Butyl-, 2-n-Butyl-, iso-Butyl-, tert. Butyl-, n-Pentyl-, iso-Pentyl, neo-Pentyl-, tert.-Pentylrest, Hexylreste, wie der n-Hexylrest, Heptylreste, wie der n- Heptylrest, Octylreste, wie der n-Octylrest und iso-Octylreste, wie der 2,2,4- Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-,m-,p-Tolylreste, Xylylreste und E-thylphenylreste, Aralkylreste, wie der Benzylrest und der α-und β-Phenylethylrest, sowie Reste der Formel -C(R¹)=CR¹₂; weitere Beispiele für **R**^{**3**} sind -OR⁶-Reste, wie Hydroxy-, Methoxy-, Ethoxy-, Isopropoxy-, Butoxy- und Phenoxyreste. Beispiele für halogenierte Reste **R**^{**3**} sind Halogenalkylreste, wie der 3,3,3-Trifluor-n-propylrest, der 2,2,2,2',2',2',-Hexafluorisopropylrest, der Heptafluorisopropylrest und Halogenarylreste, wie der o-,m-, und p-Chlorphenylrest. Beispiele für **R**^{**3**} gleich Silylreste sind Trimethylsilyl-, Ethyldimethylsilyl-, Methoxydimethylsilyl-, n-Propyldimethylsilyl-, Isopropyldimethylsilyl-, n-Butyldimethylsilyl-, tert-Butyldimethylsilyl-, Octyldimethylsilyl-, Vinyldimethylsilyl-, Phenyldimethylsilyl-, Diphenylmethylsilyl-, Hydroxypropyldimethylsilyl-, Methylvinylphenylsilyl- und Methoxypropylsilylreste.

Bevorzugt handelt es sich bei Rest **R**^{**3**} um Wasserstoffatom, Hydroxy-, Methoxyreste und Kohlenwasserstoffreste mit 1 bis 8 Kohlenstoffatomen sowie Trimethylsilyl-, Ethyldimethylsilyl-, Butyldimethylsilyl-, Octyldimethylsilylreste, wobei Wasserstoffatom, der Methylrest und der Trimethylsilylrest besonders bevorzugt sind.

Bevorzugt handelt es sich bei Rest **R**^{**4**} um einwertige Kohlenwasserstoffreste mit 1 bis 24 Kohlenstoffatomen, wie z.B. die im Zusammenhang mit Rest R³ genannten Beispiele, substituierte Kohlenwasserstoffreste, wie Hydroxypropyl-, und Chlorpropylrest und -OR⁶-Reste, wie Hydroxy-, Methoxy- und Ethoxyreste, wobei Methyl-, Ethyl-, Butyl-, Octyl-, Methoxy-, Ethoxy- und Hydroxypropylreste besonders bevorzugt sind.

Beispiele für Rest **R**^{**6**} sind die für Rest **R**^{**3**} angegebenen Reste. Bevorzugt handelt es sich bei **R**^{**6**} um Wasserstoffatom, Alkylreste und Arylreste, wobei Wasserstoffatom, der Methyl- und der Ethylrest besonders bevorzugt sind.

Beispiele für Rest **R**^{**7**} sind die für Rest **R**^{**3**} angegebenen Reste sowie 1-Trimethylsiloxypropyl-3-dimethylsilyl-, 1-Ethyldimethylsiloxypropyl-3-dimethylsilyl-, 1-Methoxydimethylsiloxypropyl-3-dimethylsilyl- und Pentamethyldisiloxanylreste.

Bevorzugt handelt es sich bei **R**^{**7**} um einwertige Reste, wie z.B. Wasserstoffatom, Methyl-, Methoxy-, Trimethylsilyl-, Ocytldimethylsilyl-, Dimethylmethoxysilyl-, 1-Trimethylsiloxypropyl-3-dimethylsilyl- und Hydroxypropyldimethylsilylreste sowie um mehrwertige Reste, wie -C₂H₄-, -Si(Me)₂-O-Si(Me)₂O_{1/2}, -Si(Me)₂-CH₂-CH₂-CH₂-O-Si(Me)₂O_{1/2}, -Si (Me)₂-O-Si(Me)O_{2/2}, -Si(Me)₂-O-SiO_{3/2}, -Si (Me)₂-CH₂-CH₂-Si(Me)₂O_{1/2} und -Si(Me)₂-CH₂-CH₂-Si(Me)O_{2/2}, wobei Me die Bedeutung von Methylrest hat.

Beispiele für Reste **R**^{**8**} sind Sauerstoffatom sowie -CH₂-, -C₂H₄-, -C₃H₆-, -C₄H₈-, -C₆H₁₂-, -C₆H₄-, -CH₂CH(CH₃)-C₆H₄-CH(CH₃)CH₂- und -(CH₂)₃O-, wobei Sauerstoffatom, -C₂H₄-, -C₃H₆- und -(CH₂)₃O- besonders bevorzugt sind.

Beispiele für Rest **R**^{**9**} sind Wasserstoffatom sowie die für Rest **R** und Rest **R**^{**1**} angegebenen Beispiele.

Bevorzugt handelt es sich bei **R**^{**9**} um einwertige Kohlenwasserstoffreste mit 1 bis 12 Kohlenstoffatomen, wobei Methyl-, Ethyl-, Phenyl- und Vinylreste besonders bevorzugt sind.

Beispiele der Einheiten der Formel (VI) sind SiO_{4/2}-, (Me)₃SiO_{1/2}-, Vi(Me)₂SiO_{1/2}-, Ph (Me)₂SiO_{1/2}-, (Me)₂SiO_{2/2}-, Ph(Me)SiO_{2/2}-, Vi(Me)SiO_{2/2}-, H (Me) SiO_{2/2}-, MeSiO_{3/2}-, PhSiO_{3/2}-, ViSiO_{3/2}-, (Me)₂(MeO)SiO_{1/2}- und OH(Me)₂SiO_{1/2}-, wobei (Me)₃SiO_{1/2}-, Vi (Me)₂SiO_{1/2}-, (Me)₂SiO_{2/2}-, Ph(Me)SiO_{2/2}-, Vi (Me)SiO_{2/2}- und Me₂(MeO)SiO_{1/2}-MeSiO_{3/2}- bevorzugt und (Me)₃SiO_{1/2}-, Vi(Me)₂SiO_{1/2}-, (Me)₂SiO_{2/2}- und Vi(Me)SiO_{2/2}- besonders bevorzugt sind mit Me gleich Methylrest, Vi gleich Vinylrest und Ph gleich Phenylrest.

Bis(alkinyl)(η-olefin)platin-Verbindungen und Verfahren zu ihrer Herstellung sind dem Fachmann zu einem kleinen Teil bekannt. Hierzu sei beispielsweise auf J. Chem.Soc., Dalton Trans. (1986) 1987-92 und Organometallics (1992) **11** 2873-2883 verwiesen. Die erfindungsgemäßen Platinkatalysatoren (D) können nach analogen Synthese- und Reinigungsschritten hergestellt werden.

Bei dem erfindungsgemäß eingesetzten Platinkatalysator (D) handelt es sich bevorzugt um Bis(alkinyl)(1,5-cyclooctadien)-platin-, Bis(alkinyl)(bicyclo[2.2.1]hepta-2,5-dien)platin-, Bis(alkinyl)(1,5-dimethyl-1,5-cyclooctadien)platin- und Bis(alkinyl)(1,6-dimethyl-1,5-cyclooctadien)platin-Komplexe.

Ein weiterer Gegenstand der vorliegenden Erfindung sind Platin-komplexe der Formel (III) sowie Platinkomplexe aus Struktureinheiten der Formeln (V) und gegebenenfalls (VI), wobei solche mit R² gleich cyclische Diene mit 6 bis 28 Kohlenstoffatomen bevorzugt sind.

Die Menge des erfindungsgemäß eingesetzten Platinkatalysators (D) richtet sich nach der gewünschten Vernetzungsgeschwindigkeit und der jeweiligen Verwendung sowie ökonomischen Gesichtspunkten. Die erfindungsgemäßen Massen enthalten Platinkatalysatoren (D) in solchen Mengen, daß ein Platingehalt von vorzugsweise 0,05 bis 500 Gewichts-ppm (= Gewichtsteile je Million Gewichtsteile), besonders bevorzugt 0,5 bis 100 Gewichts-ppm, insbesondere 1 bis 50 Gewichts-ppm, jeweils bezogen auf das Gesamtgewicht der Masse, resultiert.

Außer den Komponenten (A) bis (D) können die erfindungsgemäßen härtbaren Zusammensetzungen noch alle weiteren Stoffe enthalten, die auch bisher zur Herstellung von additionsvernetzbaren Massen eingesetzt wurden.

Beispiele für verstärkende Füllstoffe, die als Komponente (E) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (E) liegt im Bereich von 0 bis 70 Gew.-%, vorzugsweise bei 0 bis 50 Gew.-%.

Die erfindungsgemäße Siliconkautschukmasse kann wahlweise als Bestandteil (F) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A), (B) und (C) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Farbstoffe und Pigmente.

Enthalten sein können des weiteren Zusätze (G), die der gezielten Einstellung der Verarbeitungszeit, Anspringtemperatur und Vernetzungsgeschwindigkeit der erfindungsgemäßen Massen dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, niedermolekulare Siliconöle mit MethylvinylSiO_{2/2}-Gruppen und/oder R₂vinylSiO_{1/2}-Endgruppen, wie Divinyltetramethyldisiloxan, Tetravinyldimethyldisiloxan, Trialkylcyanurate, Alkylmaleate, wie Diallylmaleat, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitorzusätze (G) hängt von ihrer chemischen Struktur ab, so daß sie individuell bestimmt werden muß.

Der Inhibitorgehalt der erfindungsgemäßen Massen beträgt vorzugsweise 0 bis 50 000 ppm, besonders bevorzugt 20 bis 2000 ppm, insbesondere 100 bis 1000 ppm.

Die erfindungsgemäßen Organopolysiloxanmassen können, falls erforderlich, in Flüssigkeiten gelöst, dispergiert, suspendiert oder emulgiert werden. Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Massen der Fall sein kann. Insbesondere können die erfindungsgemäßen Massen, falls sie hochviskos sind, in Form eines Granulates zubereitet werden. Hierbei kann das einzelne Granulatteilchen alle Komponenten enthalten, oder die erfindungsgemäß eingesetzten Komponenten D und B sind getrennt in verschiedenen Granulatteilchen eingearbeitet. Hinsichtlich der elastomeren Eigenschaften der vernetzten erfindungsgemäßen Siliconmassen wird gleichfalls das gesamte Spektrum umfaßt, beginnend bei extrem weichen Silicongelen, über gummiartige Materialien bis hin zu hochvernetzten Siliconen mit glasartigem Verhalten.

Die Herstellung der erfindungsgemäßen Organopolysiloxanmassen kann nach bekannten Verfahren erfolgen, wie beispielsweise durch gleichmäßige Vermischung der einzelnen Komponenten. Die Reihenfolge dabei ist beliebig, vorzuziehen ist jedoch die gleichmäßige Vermischung des Platinkatalysators (D) mit einer Mischung aus (A), (B), gegebenenfalls (E), (F) und (G). Der erfindungsgemäß eingesetzte Platinkatalysator (D) kann dabei als Festsubstanz oder als Lösung - in einem geeigneten Lösungsmittel gelöst - oder als sog. Batch - gleichmäßig mit einer geringen Menge (A) oder (A) mit (E) vermischt - eingearbeitet werden. Die Vermischung erfolgt dabei abhängig von der Viskosität von (A) z.B. mit einem Rührer, in einem Disolver, auf einer Walze oder in einem Kneter. Der Katalysator (D) kann auch in einem organischen Thermoplasten bzw. thermoplastischen Siliconharz verkapselt werden.

Bei den erfindungsgemäß eingesetzten Komponenten (A) bis (G) kann es sich jeweils um eine einzelne Art einer solchen Komponente, wie auch um ein Gemisch aus mindestens zwei verschiedenen Arten einer solchen Komponente handeln.

Die erfindungsgemäßen durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Massen. Vorzugsweise handelt es sich dabei um Temperaturen von 100 bis 220°C, besonders bevorzugt von 130 bis 190°C, und einem Druck von 900 bis 1100 hPa. Es können aber auch höhere oder niedrigere Temperaturen und Drücke angewendet werden. Die Vernetzung kann auch photochemisch mit energiereicher Strahlung, wie z.B. sichtbares Licht mit kurzen Wellenlängen und UV-Licht, oder mit einer Kombination aus thermischer und photochemischer Anregung durchgeführt werden.

Ein weiterer Gegenstand der vorliegenden Erfindung sind Formkörper hergestellt durch Vernetzung der erfindungsgemäßen Massen.

Die erfindungsgemäßen Massen sowie die erfindungsgemäß daraus hergestellten Vernetzungsprodukte können für alle Zwecke eingesetzt werden, für die auch bisher zu Elastomeren vernetzbare Organopolysiloxanmassen bzw. Elastomere verwendet wurden. Dies umfaßt beispielsweise die Siliconbeschichtung bzw. Imprägnierung beliebiger Substrate, die Herstellung von Formteilen, z.B. im Spritzgußverfahren, Vakuumextrusionsverfahren, Extrusionsverfahren, Formgießen und Formpressen, Abformungen, die Verwendung als Dicht-, Einbett- und Vergußmassen.

Die erfindungsgemäßen vernetzbaren Massen haben den Vorteil, daß sie in einem einfachen Verfahren unter Verwendung leicht zugänglicher Ausgangsstoffe und damit wirtschaftlich hergestellt werden können.

Die erfindungsgemäßen vernetzbaren Massen haben den Vorteil, daß sie als einkomponentige Formulierung bei 25°C und Umgebungsdruck eine gute Lagerstabilität aufweisen und erst bei erhöhter Temperatur rasch vernetzen.

Die erfindungsgemäßen Siliconmassen haben den Vorteil, daß diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt (extrem lange Topfzeit) und die erst bei erhöhter Temperatur rasch vernetzt.

Bei der Herstellung der erfindungsgemäßen vernetzbaren Massen ist es von großem Vorteil, daß sich der Platinkatalysator (D) leicht einarbeiten läßt und kein Lösungsmittel dazu notwendig ist.

Die erfindungsgemäßen Massen haben des weiteren den Vorteil, daß die vernetzten Siliconkautschuke eine ausgezeichnete Durchsichtigkeit aufweisen.

Die erfindungsgemäßen Massen haben ferner den Vorteil, daß die Hydroslilylierungsreaktion sich nicht mit der Reaktionsdauer verlangsamt.

Die erfindungsgemäßen Massen haben ferner den Vorteil, daß die Hydroslilylierungsreaktion sich auch nach langer Lagerung bei Raumtemperatur nicht verlangsamt.

Die erfindungsgemäßen Platin-Komplexe sind nützlich als Katalysatoren für die wohlbekannte Hydrosilylierungsreaktion in der Organosiliciumchemie, als Katalysator für die Hydrierung ungesättigter organischer Verbindungen oder Polymere und zur Oligomerisierung von Acetylen und anderen Alkinen.

Die erfindungsgemäßen Platin-Katalysatoren haben des weiteren den Vorteil, daß endständige Doppelbindungen bei der Hydrosilylierung nicht nach innen umlagern, wodurch schwachreaktives isomerisiertes Ausgangsprodukt verbliebe.

Die erfindungsgemäßen Platin-Katalysatoren haben ferner den Vorteil, daß keine Platin-Kolloide gebildet werden und durch ihren Einsatz keine Verfärbungen resultieren.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25°C.
**COD** bedeutet Cycloocta-1,5-dien,
**Me**_{**2**}**COD** bedeutet ein Gemisch aus 1,5-Dimethylcycloocta-1,5-dien und 1,6-Dimethylcycloocta-1,5-dien,
**p-** bedeutet para-Substitution am Aromaten,
**m-** bedeutet meta-Substitution am Aromaten,
**Vi** bedeutet Vinylrest,
**Me** bedeutet Methylrest und
**Ph** bedeutet Phenylrest.

### Herstellung des Katalysators 1

Eine Suspension von 0,50 g [PtCl₂(COD)] in 20 ml Methanol wurde unter Stickstoff auf -20°C gekühlt. Anschließend wurde eine frisch hergestellte Lösung von 0,77 g (4-Trimethylsilylphenylethinyl)trimethylsilan (hergestellt nach J.Chem.Soc.(C)1967, 1364-1366) und Natriummethanolat (hergestellt aus 61,5 mg Natrium und 15 ml Methanol) langsam zugetropft. Nach ca. 20 Minuten wurde auf Raumtemperatur erwärmt, der Niederschlag abfiltriert und mit Aceton fünfmal gewaschen. Es wurden 0,78 g eines Platinkomplexes der nachfolgenden Formel erhalten:

[(COD)Pt(p-C≡C-C₆H₄-SiMe₃)₂]

Unter analogen Bedingungen kann Katalysator 1 auch mit 4-Trimethylsilylphenylacetylen anstelle des (4-Trimethylsilylphenylethinyl)trimethylsilans hergestellt werden.

### Herstellung des Katalysators 2

Eine Suspension von 0,50 g [PtCl₂(COD)] in 20 ml Methanol wurde unter Stickstoff auf -20°C gekühlt. Anschließend wurde eine frisch hergestellte Lösung von 0,77 g (3-Trimethylsilylphenylethinyl)trimethylsilan (hergestellt nach J.Chem.Soc.(C)1967, 1364-1366) und Natriummethanolat (hergestellt aus 61,5 mg Natrium und 15 ml Methanol) langsam zugetropft. Nach ca. 20 Minuten wurde auf Raumtemperatur erwärmt, der Niederschlag abfiltriert und mit Aceton fünfmal gewaschen. Es wurden 0,81 g eines Platinkomplexes der nachfolgenden Formel erhalten:

[(COD)Pt(m-C≡C-C₆H₄-SiMe₃)₂]

### Herstellung des Katalysators 3

Eine Suspension von 0,50 g [PtCl₂(COD)] in 15 ml Methanol wurde unter Stickstoff auf -20°C gekühlt. Anschließend wurde eine frisch hergestellte Lösung von 0,84 g (4-Dimethyloctylsilylphenylacetylen (Herstellung analog J.Chem.Soc.(C)1967, 1364-1366, wobei n-Octyldimethylchlorsilan anstelle von Trimethylchlorsilan verwendet wurde) und Natriummethanolat (hergestellt aus 61,5 mg Natrium und 15 ml Methanol) langsam zugetropft. Nach ca. 60 Minuten wurde auf Raumtemperatur erwärmt, der Niederschlag abfiltriert und mit Aceton fünfmal gewaschen. Es wurden 0,84 g eines Platinkomplexes der nachfolgenden Formel erhalten:

{ (COD)Pt[p-C≡C-C₆H₄-SiMe₂-(CH₂)₇-CH₃]₂}

### Herstellung des Katalysators 4

Die oben für die Herstellung von Katalysator 1 beschriebene Verfahrensweise wird wiederholt mit der Abänderung, daß anstelle von 0,50 g [PtCl₂(COD)] 0,54 g [PtCl₂(Me₂COD)] eingesetzt wurden. Es wurden 0,73 g des Platinkomplexes der nachfolgenden Formel erhalten:

[(Me₂COD)Pt(p-C≡C-C₆H₄-SiMe₃)₂]

### Herstellung des Katalysators 5

Eine Suspension von 0,50 g [PtCl₂(COD)] in 20 ml Methanol wurde unter Stickstoff auf -20°C gekühlt. Anschließend wurde eine frisch hergestellte Lösung von 0,72 g (4-Dimethylsilylphenylethinyl)trimethylsilan (hergestellt analog J.Chem.Soc. (C) 1967, 1364-1366, wobei anstelle von Chlortrimethylsilan Dimethylchlorsilan (käuflich bei ABCR GmbH & Co.KG) verwendet wurde) und Natriummethanolat (hergestellt aus 61,5 mg Natrium und 15 ml Methanol) langsam zugetropft. Nach circa 60 Minuten wurde auf Raumtemperatur erwärmt, der Niederschlag abfiltriert, in Aceton gerührt, abfiltriert und im Vakuum getrocknet. Es wurden 0,83 g eines Platinkomplexes der nachfolgenden Formel erhalten:

[ (COD) Pt (p-C≡C-C₆H₄-SiMe₂OMe)₂]

### Herstellung des Katalysators 6

Eine Suspension von 0,50 g [PtCl₂(COD)] in 20 ml Methanol wurde unter Stickstoff auf -20°C gekühlt. Anschließend wurde eine frisch hergestellte Lösung von 1,2 g (4-Trimethylsiloxypropylphenylethinyl)trimethylsilan (hergestellt analog J.Chem.Soc. (C) 1967, 1364-1366, wobei anstelle von Chlortrimethylsilan 3-(Trimethylsiloxypropyl)dimethylchlorsilan (käuflich bei ABCR GmbH & Co.KG) verwendet wurde) und Natriummethanolat (hergestellt aus 61,5 mg Natrium und 15 ml Methanol) langsam zugetropft. Nach circa 20 Minuten wurde auf Raumtemperatur erwärmt, der Niederschlag abfiltriert, in Aceton gerührt, abfiltriert und im Vakuum getrocknet. Es wurden 0,99 g eines Platinkomplexes der nachfolgenden Formel erhalten:

[ (COD) Pt (p-C≡C-C₆H₄-SiMe₂CH₂CH₂CH₂OH)₂]

### Herstellung Katalysator 7

0,5 g Katalysator 6 wurden in Diethylether suspendiert und bei 79°C mit 1,13 ml Butyllithium (1,6 M in Hexanfraktion, erhältlich bei Sigma-Aldrich Chemie GmbH) versetzt. Nach dem Auftauen auf O°C wurden 0,15 g Vinyldimethylchlorsilan (erhältlich bei ABCR GmbH & Co.KG) zugetropft und 1 Stunde gerührt. Anschließend wurde die Mischung zur Trockene eingeengt, in Toluol aufgenommen, vom LiCl abfiltriert und wiederum zur Trockene eingeengt. Es wurden 0,47 g eines Platinkomplexes der nachfolgenden Formel erhalten:

[(COD)Pt(p-C≡C-C₆H₄-SiMe₂CH₂CH₂CH₂OSiMe₂Vi)₂]

### Herstellung Katalysator 8

2,08 g silanolterminiertes Polydimethylsiloxan mit im Mittel 0,8 Gew.-% SiOH-Gruppen (erhältlich bei ABCR GmbH&Co.KG), 1,0 g Katalysator 5, 0,02 g Dibutylphosphat (erhältlich bei Sigma-Aldrich Chemie GmbH) wurden 2 Stunden gerührt, anschließend wurden 0,013 g Titan(IV)-butylat (erhältlich bei Sigma-Aldrich Chemie GmbH) eingerührt, und die Mischung wurde filtriert. Es wurden 2,3 g eines Platinkomplexes erhalten, der gemäß ¹H- und ²⁹Si-NMR im Mittel folgende Formel aufwies (eventuelle Reste einer noch vorhandenen Titanphosphat-Verbindung stören nicht): {(COD) Pt (p-C≡C-C₆H₄-SiMe₂OMe) [p-C≡C-C₆H₄(-SiMe₂O)₅₉-SiMe₂-C₆H₄-C≡C-p] Pt (COD) [p-C≡C-C₆H₄(-SiMe₂O)₅₉-SiMe₂-C₆H₄-C≡C-p) Pt (COD) (p-C≡C-C₆H₄-SiMe₂OMe)}

### Beispiel 1

50,0 g eines Vinyldimethylsiloxy-terminierten Polydimethylsiloxans mit einer Viskosität von 20 Pa·s, 3 mg 1-Ethinyl-1-cyclohexanol und 1,0 g SiH-Vernetzer wurden mit Hilfe eines Rührers der Firma Janke & Kunkel IKA-Labortechnik, TYP RE 162 homogen vermischt, wobei der SiH-Vernetzer ein Mischpolymerisat aus Dimethylsiloxy- und Methylhydrogensiloxy- und Trimethylsiloxy-Einheiten mit einer Viskosität von 330 mPa·s und einem Gehalt an Si-gebundenem Wasserstoff von 0,46 Gew.-% war. Anschließend wurden 1,7 mg (das entspricht einem Gehalt von 10 ppm Pt bezogen auf die Gesamtmasse) Katalysator 1, dessen Herstellung oben beschrieben ist, - in 0,5 ml Methylenchlorid gelöst - bei Raumtemperatur eingerührt.

### Beispiel 2

Die in Beispiel 1 beschriebene Verfahrensweise wird wiederholt mit der Abänderung, daß anstelle von 3 mg Ethinylcyclohexanol 30 mg Ethinylcyclohexanol eingerührt wurden.

### Vergleichsbeispiel 1

Die in Beispiel 2 beschriebene Verfahrensweise wird wiederholt mit der Abänderung, daß anstelle von Katalysator 1 10 ppm Platin als Platin-Divinyltetramethyldisiloxan-Komplex in Vinyl-terminiertem Polydimethylsiloxan (käuflich erhältlich bei ABCR GmbH & Co, Deutschland) verwendet wurden.

### Beispiel 3

Die in Beispiel 2 beschriebene Verfahrensweise wird wiederholt mit der Abänderung, daß anstelle von Katalysator 1 1,7 mg Katalysator 2, dessen Herstellung oben beschrieben ist, (entspricht einem Gehalt von 10 ppm Platin bezogen auf die gesamte Siliconmasse) eingemischt wurden.

### Beispiel 4

Die in Beispiel 2 beschriebene Verfahrensweise wird wiederholt mit der Abänderung, daß anstelle von Katalysator 1 2,2 mg Katalysator 3, dessen Herstellung oben beschrieben ist, (entspricht einem Gehalt von 10 ppm Platin bezogen auf die gesamte Siliconmasse) eingemischt wurden.

### Beispiel 5

Die in Beispiel 2 beschriebene Verfahrensweise wird wiederholt mit der Abänderung, daß anstelle von Katalysator 1 1,8 mg Katalysator 4, dessen Herstellung oben beschrieben ist, (entspricht einem Gehalt von 10 ppm Platin bezogen auf die gesamte Siliconmasse) eingemischt wurden.

### Beispiel 6

In einem Laborkneter wurden 255 Masseteile eines Vinyldimethylsiloxy-terminierten Polydimethylsiloxans mit einer Viskosität von 20 Pa·s vorgelegt, auf 150°C aufgeheizt und mit 180 Masseteilen einer hydrophoben pyrogenen Kieselsäure mit einer spezifischen Oberfläche nach BET von 300 m²/g und einem Kohlenstoffgehalt von 3,95 Gew.-%, versetzt. Es entstand eine hochviskose Masse, die anschließend mit 165 Masseteile des obengenannten Polydimethylsiloxans verdünnt wurde. Durch Kneten unter Vakuum (10 mbar) bei 150°C wurden während einer Stunde flüchtige Bestandteile entfernt.

488,1 g der so hergestellten Grundmasse wurden auf einer Walze bei einer Temperatur von 25°C mit 0,160 g Inhibitor, 10,95 g SiH-Vernetzer und 2,0 g Katalysatorbatch zu einer homogenen Masse vermischt, wobei der Inhibitor 1-Ethinyl-1-cyclohexanol war, der SiH-Vernetzer ein Mischpolymerisat aus Dimethylsiloxy- und Methylhydrogensiloxy- und Trimethylsiloxy-Einheiten mit einer Viskosität von 320 mPa·s und einem Gehalt an Si-gebundenem Wasserstoff von 0,48 Gew.-% war und der Katalysatorbatch eine Mischung aus obengenanntem Vinylpolydimethylsiloxan und Katalysator 1, dessen Herstellung oben beschrieben ist, (5 ppm Platin-Gehalt bezogen auf die gesamte Masse) war.

### Vergleichsbeispiel 2

Die in Beispiel 6 beschriebene Arbeitsweise wird wiederholt mit der Abänderung daß als Katalysator 8 ppm Platin als Platin-Divinyltetramethyldisiloxan-Komplex in Vinyl-terminiertem Polydimethylsiloxan (käuflich erhältlich bei ABCR GmbH & Co, Deutschland) verwendet wurde.

### Beispiel 7

589,4 Masseteile eines Vinyldimethylsiloxy-terminierten Polydimethylsiloxans mit einer Brabender-Plastizität von 630 mkp entsprechend einer mittleren Molmasse von ca. 500000 g/mol wurden mit 252,6 Masseteile einer hydrophoben pyrogenen Kieselsäure mit einer Oberfläche nach BET von 300 m²/g und einem Kohlenstoffgehalt von 3,95 Gew.-%, die in Portionen zudosiert wurde, 4 Stunden in einem Kneter zu einer homogenen Masse vermischt.

500 g der so erhaltenen Grundmasse wurden auf einer Walze bei einer Temperatur von 20°C mit 0,25 g Inhibitor, 7,5 g SiH-Vernetzer und 2 g Katalysatorbatch zu einer homogenen Masse vermischt, wobei als Inhibitor 1-Ethinyl-1-cyclohexanol eingesetzt wurde, und der SiH-Vernetzer ein Mischpolymerisat aus Dimethylsiloxy- und Methylhydrogensiloxy- und Trimethylsiloxy-Einheiten mit einer Viskosität von 310 mPa·s bei 25°C und einem Gehalt an Si-gebundenem Wasserstoff von 0,46 Gew.-% war. Der Katalysatorbatch wird hergestellt indem 500 g der oben beschriebenen Grundmasse mit 2,1 g Katalysator 1 im Kneter 30 Minuten homogenisiert wurden.

### Beispiel 8

Die in Beispiel 7 beschriebene Verfahrensweise wird wiederholt mit der Abänderung, daß als Katalysator 5 ppm Platin als Platinkomplex 3 verwendet wurde.

### Beispiel 9

Die in Beispiel 2 beschriebene Verfahrensweise wird wiederholt mit der Abänderung, daß als Katalysator 10 ppm Platin als Platinkomplex 5 verwendet wurden.

### Beispiel 10

Die in Beispiel 2 beschriebene Verfahrensweise wird wiederholt mit der Abänderung, daß als Katalysator 10 ppm Platin als Platinkomplex 6 verwendet wurden.

### Beispiel 11

Die in Beispiel 2 beschriebene Verfahrensweise wird wiederholt mit der Abänderung, daß als Katalysator 10 ppm Platin als Platinkomplex 7 verwendet wurden.

### Beispiel 12

Die in Beispiel 2 beschriebene Verfahrensweise wird wiederholt mit der Abänderung, daß als Katalysator 10 ppm Platin als Platinkomplex 8 verwendet wurden.

### Beispiel 13

Die thermischen Härtungseigenschaften der in den Beispielen 1, 2, 3, 4, 5, 9, 10, 11 und 12 sowie Vergleichsbeispiel 1 (V1) hergestellten Siliconmassen wurden mit einem Dynamic Analyzer RDA II, der Fa. Rheometrics mit einer Aufheizkurve von 30 bis 200°C und mit einer Heizrate von 5°C/Minute gemessen. Zur quantitativen Ermittlung der Lagerbarkeit wurden die hergestellten Formulierungen bei Raumtemperatur (RT) und 50°C gelagert, wobei die Zeitdauer (gemessen in Tagen) bis zur Verdoppelung des Anfangswertes der Viskosität ermittelt wurde. Die Meßergebnisse werden in Tabelle 1 dargestellt.

Die thermischen Härtungseigenschaften der in den Beispielen 6, 7 und 8 sowie Vergleichsbeispiel 2 (V2) hergestellten Siliconmassen wurden mit einem Goettfert-Elastograph gemessen. Zur quantitativen Ermittlung der Lagerbarkeit wurden die hergestellten Formulierungen bei Raumtemperatur (RT) und 50°C gelagert, wobei die Zeitdauer (gemessen in Tagen) bis zur Verdoppelung des Anfangswertes der Viskosität ermittelt wurde. Die Meßergebnisse werden in Tabelle 2 dargestellt.

**Tabelle 1:**

| Beispiel | 1 | 2 | 3 | V1 | 4 | 5 | 9 | 10 | 11 | 12 |
|---|---|---|---|---|---|---|---|---|---|---|
| Anspringtemperatur [°C] | 120 | 127 | 112 | 96 | 118 | 108 | 121 | 124 | 119 | 115 |
| Lagerung bei RT | >80 d | >80 d | >78 d | 12 d | >70 d | >70 d | >79 d | >79 d | >79 d | >79 d |
| Lagerung bei 50°C | 29 d | >80 d | 56 d | 1 d | >70 d | 31 d | 59 d | 54 d | >57 d | 50 d |

Die Anspringtemperatur wurde mit einer Heizrate von 5°C/min bestimmt.
d: Tage

**Tabelle 2:**

| Beispiele | 6 | V2 | 7 | 8 |
|---|---|---|---|---|
| a_{T} [°C] | 126 | 116 | 133 | 127 |
| t₉₀ [s] | 26 | 26 | 28 | 28 |
| Lagerung bei RT | >93 d | 15 d | >90 d | >90 d |
| Lagerung bei 50°C | 63 d | 3 d | 78 d | 45 d |
| d: Tage | | | | |
| s: Sekunden | | | | |

Die Anspringtemperatur a_{T} wurde mit einer Heizrate von 10°C/min bestimmt. Die Temperatur, die dem 4%-Wert des maximalen Drehmomentes entspricht, wurde als Anspringtemperatur definiert. Die Bestimmung des t₉₀-Wertes erfolgte nach DIN 53529 T3. Die Dauer vom Beginn der Härtung bis 90% (t₉₀-Wert) des maximalen Drehmoments wurde dabei bei 180°C ermittelt.

Zum weiteren Vergleich wurden von einigen Siliconmassen sofort nach der Herstellung und nach einmonatiger Lagerung der Massen bei Raumtemperatur vernetzte Siliconkautschuk-Folien hergestellt und die mechanischen Eigenschaften bestimmt. Die Herstellung der vernetzten Siliconkautschuke erfolgte dadurch, daß die Mischung des jeweiligen Beispiels in einer hydraulischen Presse bei einer Temperatur von 170°C während 10 Minuten zum Siliconkautschuk vernetzt wurde. Die entformten ca. 2 mm bzw. 6 mm dicken Siliconkautschukfolien wurden mechanischen Prüfungen unterworfen.
Das Ergebnis kann Tabelle 3 entnommen werden.

**Tabelle 3:**

| sofort nach der Herstellung | Härte [Shore A] | RF [N/mm²] | RD [%] | WRW [N/mm] | RP [%] |
|---|---|---|---|---|---|
| Beispiel 6 | 52 | 10,0 | 590 | 31,5 | 60 |
| Vergleich V2 | 51 | 10,6 | 610 | 28,7 | 58 |
| Beispiel 7 | 37 | 12,9 | 1150 | 50,1 | 50 |
| Beispiel 8 | 38 | 12,8 | 1070 | 49,8 | 49 |
| Eigenschaften nach einmonatiger Lagerung | | | | | |
| Beispiel 6 | 50 | 9,8 | 580 | 30,8 | 62 |
| Vergleich V2 | *) | *) | *) | *) | *) |
| Beispiel 7 | 36 | 12,3 | 1180 | 48,5 | 49 |
| Beispiel 8 | 39 | 13,0 | 1100 | 48,9 | 47 |

| | | | | | |
|---|---|---|---|---|---|
| *): nach 15 d gehärtet Härte: Shore-A-Härte wurde bestimmt gemäß DIN 53505 RF: Reißfestigkeit wurde bestimmt gemäß DIN 53504-S1 RD: Reißdehnung wurde bestimmt gemäß DIN 53504-S1 WRW: Weiterreißwiderstand wurde bestimmt gemäß ASTM D 624 RP: Rückprallelastizität wurde bestimmt gemäß DIN 53512 | | | | | |

Wie aus Tabelle 3 ersichtlich ist, wird die Mechanik durch einmonatige Lagerung kaum verändert.

## Patentansprüche

1. Härtbare Organopolysiloxanmassen, enthaltend
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen oder anstelle von (A) und (B)
(C) Organopolysiloxane, die SiC-gebundene Reste mit aliphatischen Kohlenstoff-Kohlenstoff-Mehrfachbindungen und Si-gebundene Wasserstoffatome aufweisen, und
(D) Platinkatalysator, ausgewählt aus der Gruppe bestehend aus Verbindungen der Formel 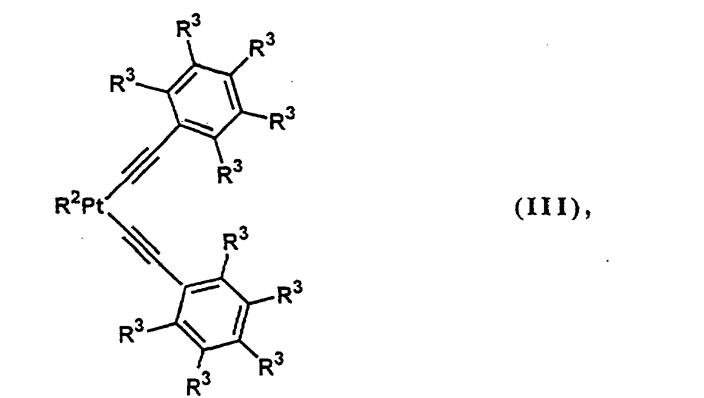
und/oder oligomeren oder polymeren Verbindungen, die aus Struktureinheiten der allgemeinen Formel 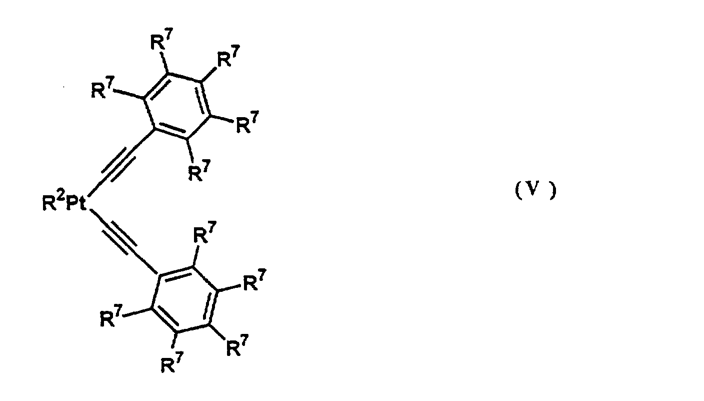 und gegebenenfalls Struktureinheiten der allgemeinen Formel
R⁹ᵣSiO_{(4-r)/2} (VI)
zusammengesetzt sind,
wobei
**R**^{**2**} ein gegebenenfalls substituiertes Dien bedeutet, das durch mindestens eine π-Bindung mit Platin verbunden ist und eine unverzweigte oder eine verzweigte Kette mit 4 bis 18 Kohlenstoffatomen oder einen cyclischen Ring mit 6 bis 28 Kohlenstoffatomen darstellt,
**R**^{**3**} gleich oder verschieden sein kann und Wasserstoffatom, Halogenatom, -SiR⁴₃, -OR⁶ oder einwertige, gegebenenfalls substituierte Kohlenwasserstoffreste mit 1 bis 24 Kohlenstoffatomen bedeutet, mit der Maßgabe, daß in den Verbindungen der Formel (III) mindestens ein Rest R³ die Bedeutung von -SiR⁴₃ hat.
**R**^{**4**} gleich oder verschieden sein kann und Wasserstoff, Halogenatom, -OR⁶ oder einwertige, gegebenenfalls substituierte Kohlenwasserstoffreste mit 1 bis 24 Kohlenstoffatomen bedeutet,
**R**^{**6**} gleich oder verschieden sein kann und Wasserstoffatom, -SiR⁴₃ oder ein einwertiger gegebenenfalls substituierter Kohlenwasserstoffrest mit 1 bis 20 Kohlenstoffatomen ist,
**R**^{**7**} gleich oder verschieden sein kann und Wasserstoffatom, Halogenatom, -SiR⁴₃, -SiR⁴₍₃₋ₜ₎[R⁸SiR⁹ₛO_{(3-s)/2}]ₜ, -OR⁶ oder einwertige, gegebenenfalls substituierte Kohlenwasserstoffreste mit 1 bis 24 Kohlenstoffatomen bedeutet, mit der Maßgabe, daß in Formel (V) mindestens ein Rest R⁷ die Bedeutung von -SiR⁴₍₃₋ₜ₎[R⁸SiR⁹ₛO_{(3-s)/2}]ₜ hat,
**R**^{**8**} gleich oder verschieden sein kann und Sauerstoff oder zweiwertige, gegebenenfalls substituierte Kohlenwasserstoffreste mit 1 bis 24 Kohlenstoffatomen, die über Sauerstoffatom an das Silicium gebunden sein können, bedeutet,
**R**^{**9**} gleich oder verschieden sein kann und Wasserstoff oder einen organischen Rest bedeutet,
r 0, 1, 2 oder 3 ist,
s 0, 1, 2 oder 3 bedutet und
t 1, 2 oder 3 ist.

2. Härtbare Organopolysiloxanmassen gemäß Anspruch 1, **dadurch gekennzeichnet, daß** es sich bei Bestandteil (A) um eine aliphatisch ungesättigte Organosiliciumverbindung handelt.

3. Härtbare Organopolysiloxanmassen gemäß Anspruch 1 oder 2, **dadurch gekennzeichnet, daß** als Organosiliciumverbindung (A), lineare oder verzweigte Organopolysiloxane aus Einheiten der Formel
RₐR¹_{b}SiO_{(4-a-b)/2} (I)
eingesetzt werden, wobei
R gleich oder verschieden sein kann und einen einwertigen, von aliphatischen Kohlenstoff-Kohlenstoff-Mehrfachbindungen freien, organischen Rest,
R¹ gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
a 0, 1, 2 oder 3 ist und
b 0, 1 oder 2 ist
mit der Maßgabe, daß die Summe a + b kleiner oder gleich 3 ist und mindestens 2 Reste R¹ je Molekül vorliegen.

4. Härtbare Organopolysiloxanmassen gemäß einem oder mehreren der Ansprüche 1 bis 3, **dadurch gekennzeichnet, daß** es sich bei Rest R um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen handelt.

5. Härtbare Organopolysiloxanmassen gemäß einem oder mehreren der Ansprüche 1 bis 4, **dadurch gekennzeichnet, daß** als Organopolysiloxane (B) lineare, cyclische oder verzweigte Organopolysiloxane aus Einheiten der Formel
R_{c}H_{d}SiO_{(4-c-d)/2} (II)
eingesetzt werden, wobei
R gleich oder verschieden sein kann und die oben angegebene Bedeutung hat,
c 0, 1, 2 oder 3 ist und
d 0, 1 oder 2 ist,
mit der Maßgabe, daß die Summe von c + d kleiner oder gleich 3 ist und mindestens zwei Si-gebundene Wasserstoffatome je Molekül vorliegen.

6. Härtbare Organopolysiloxanmassen gemäß einem oder mehreren der Ansprüche 1 bis 5, **dadurch gekennzeichnet, daß** als Katalysator (D) Bis(alkinyl)(1,5-cyclooctadien)platin-, Bis(alkinyl)(bicyclo[2.2.1]hepta-2,5-dien)platin-, Bis(alkinyl)(1,5-dimethyl-1,5-cyclooctadien)platin- und Bis(alkinyl)(1,6-dimethyl-1,5-cyclooctadien)platin-Komplexe eingesetzt werden.

7. Platinkomplexe der Formel (III).

8. Platinkomplexe aus Struktureinheiten der Formeln (V) und gegebenenfalls (VI).

9. Platinkomplexe gemäß Anspruch 7 oder 8, **dadurch gekennzeichnet, daß** R² gleich die Bedeutung von cyclischem Dien mit 6 bis 28 Kohlenstoffatomen hat.

10. Formkörper hergestellt durch Vernetzung der erfindungsgemäßen Massen gemäß einem oder mehreren der Ansprüche 1 bis 6.

## Claims

1. Curable organopolysiloxane materials containing
(A) compounds which have radicals having aliphatic carbon-carbon multiple bonds,
(B) organopolysiloxanes having Si-bonded hydrogen atoms or, instead of (A) and (B),
(C) organopolysiloxanes which have SiC-bonded radicals having aliphatic carbon-carbon multiple bonds and Si-bonded hydrogen atoms, and
(D) a platinum catalyst selected from the group consisting of compounds of the formula 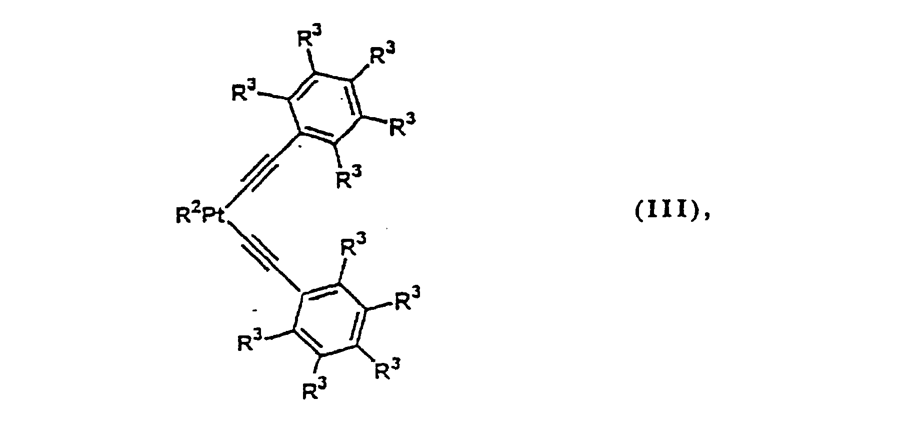 and/or oligomeric or polymeric compounds which are composed of structural units of the general formula 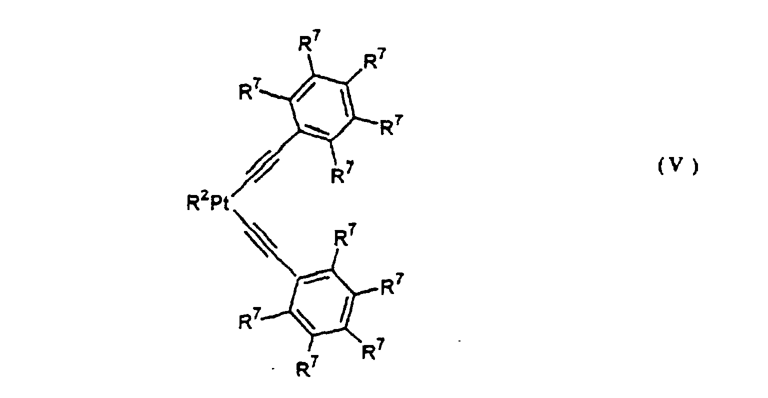 and optionally structural units of the general formula
R⁹ᵣSiO_{(4-r)/2} (VI)
in which
**R**^{**2**} denotes an optionally substituted diene which is linked by at least one n-bond to platinum and represents a straight or a branched chain having 4 to 18 carbon atoms or a cyclic ring having 6 to 28 carbon atoms,
**R**^{**3**} may be identical or different and denotes a hydrogen atom, a halogen atom, -SiR⁴₃, -OR⁶ or monovalent, optionally substituted hydrocarbon radicals having 1 to 24 carbon atoms, with the proviso that, in the compounds of the formula (III), at least one radical R³ denotes -SiR⁴₃,
**R**^{**4**} may be identical or different and denotes hydrogen, a halogen atom, -OR⁶ or monovalent, optionally substituted hydrocarbon radicals having 1 to 24 carbon atoms,
**R**^{**6**} may be identical or different and is a hydrogen atom, -SiR⁴₃ or a monovalent, optionally substituted hydrocarbon radical having 1 to 20 carbon atoms,
**R**^{**7**} may be identical or different and denotes a hydrogen atom, a halogen atom, -SiR⁴₃, -SiR⁴₍₃₋ₜ₎[R⁸SiR⁹ₛO_{(3-s)/2}]ₜ, -OR⁶ or monovalent, optionally substituted hydrocarbon radicals having 1 to 24 carbon atoms, with the proviso that, in formula (V), at least one radical R⁷ denotes -SiR⁴₍₃₋ₜ₎[R⁸SiR⁹ₛO_{(3-s)/2}]ₜ,
**R**^{**8**} may be identical or different and denotes oxygen or divalent, optionally substituted hydrocarbon radicals having 1 to 24 carbon atoms, which may be bonded to the silicon via an oxygen atom,
**R**^{**9**} may be identical or different and denotes hydrogen or an organic radical,
r is 0, 1, 2 or 3,
s denotes 0, 1, 2 or 3 and
t is 1, 2 or 3.

2. Curable organopolysiloxane materials according to Claim 1, **characterized in that** constituent (A) is an aliphatically unsaturated organosilicon compound.

3. Curable organopolysiloxane materials according to Claim 1 or 2, **characterized in that** the organosilicon compound (A) used is a linear or branched organopolysiloxane comprising units of the formula
RₐR¹_{b}SiO_{(4-a-b)/2} (I)
in which
R may be identical or different and denotes a monovalent organic radical, free of aliphatic carbon-carbon multiple bonds,
R¹ may be identical or different and denotes a monovalent, optionally substituted SiC-bonded hydrocarbon radical having an aliphatic carbon-carbon multiple bond,
a is 0, 1, 2 or 3 and
b is 0, 1 or 2
with the proviso that the sum a + b is less than or equal to 3 and at least 2 radicals R¹ are present per molecule.

4. Curable organopolysiloxane materials according to one or more of Claims 1 to 3, **characterized in that** radical R is a monovalent, SiC-bonded hydrocarbon radical free of aliphatic carbon-carbon multiple bonds and having 1 to 6 carbon atoms.

5. Curable organopolysiloxane materials according to one or more of Claims 1 to 4, **characterized in that** the organopolysiloxanes (B) used are linear, cyclic or branched organopolysiloxanes comprising units of the formula
R_{c}H_{d}SiO_{(4-c-d)/2} (II)
in which
R may be identical or different and has the abovementioned meaning,
c is 0, 1, 2 or 3 and
d is 0, 1 or 2,
with the proviso that the sum of c + d is less than or equal to 3 and at least two Si-bonded hydrogen atoms are present per molecule.

6. Curable organopolysiloxane materials according to one or more of Claims 1 to 5, **characterized in that** bis(alkynyl)(1,5-cyclooctadienyl)platinum, bis(alkynyl)-(bicyclo[2.2.1]hepta-2,5-dienyl)platinum, bis(alkynyl)-(1,5-dimethyl-1,5-cyclooctadienyl)platinum and bis(alkynyl)(1,6-dimethyl-1,5-cyclooctadienyl)platinum complexes are used as catalyst (D).

7. Platinum complexes of the formula (III).

8. Platinum complexes comprising structural units of the formulae (V) and optionally (VI).

9. Platinum complexes according to Claim 7 or 8, **characterized in that** R² denotes a cyclic diene having 6 to 28 carbon atoms.

10. Moldings produced by crosslinking the materials according to the invention, according to one or more of Claims 1 to 6.

## Revendications

1. Masses d'organopolysiloxanes durcissables, contenant
(A) des composés qui présentent des radicaux avec des liaisons carbone-carbone multiples aliphatiques,
(B) des organopolysiloxanes présentant des atomes d'hydrogène liés par Si ou, au lieu de (A) et (B),
(C) des organopolysiloxanes qui présentent des radicaux liés par SiC avec des liaisons carbone-carbone multiples aliphatiques et des atomes d'hydrogène liés par Si et
(D) un catalyseur de platine, choisi parmi le groupe constitué de composés de formule 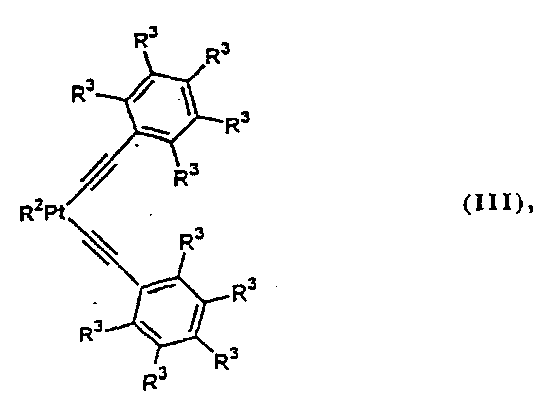 et/ou des composés oligomères ou polymères, qui sont composés d'unités de structure de formule générale 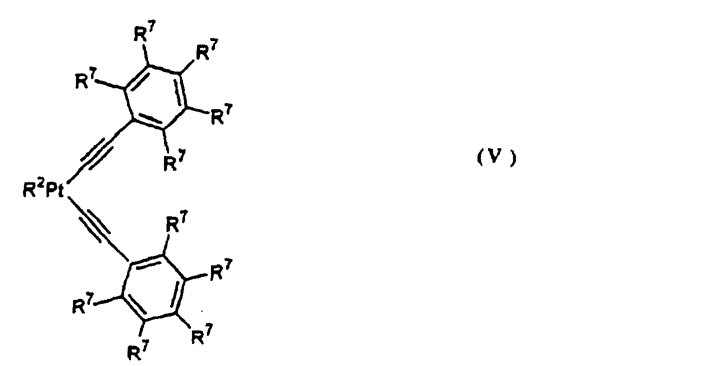 et, le cas échéant, d'unités de structure de formule générale
R⁹ᵣSiO_{(4-r)/2} (VI)
dans laquelle
R² signifie un diène le cas échéant substitué qui est relié par au moins une liaison π avec le platine et qui représente une chaîne non ramifiée ou ramifiée comprenant 4 à 18 atomes de carbone ou un cycle comprenant 6 à 28 atomes de carbone,
R³ peut être identique ou différent et signifie un atome d'hydrogène, un atome d'halogène, -SiR⁴₃, -OR⁶ ou des radicaux hydrocarbonés monovalents, le cas échéant substitués, comprenant 1 à 24 atomes de carbone, à condition que dans les composés de formule (III), au moins un radical R³ ait la signification -SiR⁴₃,
R⁴ peut être identique ou différent et signifie un hydrogène, un atome d'halogène, -OR⁶ ou des radicaux hydrocarbonés monovalents, le cas échéant substitués, comprenant 1 à 24 atomes de carbone,
R⁶ peut être identique ou différent et est un atome d'hydrogène, -SiR⁴₃ ou un radical hydrocarboné monovalent, le cas échéant substitué, comprenant 1 à 20 atomes de carbone,
R⁷ peut être identique ou différent et signifie un atome d'hydrogène, un atome d'halogène, -SiR⁴₃,
-SiR⁴₍₃₋ₜ₎[R⁸SiR⁹ₛO_{(3-s)/2}]ₜ, -OR⁶ ou des radicaux hydrocarbonés monovalents, le cas échéant substitués, comprenant 1 à 24 atomes de carbone, à condition que dans la formule (V), au moins un radical R⁷ ait la signification -SiR⁴₍₃₋ₜ₎-[R⁸SiR⁹ₛO_{(3-s)/2}]ₜ,
R⁸ peut être identique ou différent et signifie un oxygène ou des radicaux hydrocarbonés divalents, le cas échéant substitués, comprenant 1 à 24 atomes de carbone, qui peuvent être liés via l'atome d'oxygène au silicium,
R⁹ peut être identique ou différent et signifie un hydrogène ou un radical organique,
r est égal à 0, 1, 2 ou 3,
s est égal à 0, 1, 2 ou 3 et
t est égal à 1, 2 ou 3.

2. Masses d'organopolysiloxanes durcissables selon la revendication 1, **caractérisées en ce qu'**il s'agit pour le constituant (A) d'un composé organosilicié aliphatiquement insaturé.

3. Masses d'organopolysiloxanes durcissables selon les revendications 1 ou 2, **caractérisées en ce qu'**on utilise comme composé organosilicié (A) des organopolysiloxanes linéaires ou ramifiés constitués d'unités de formule
RₐR¹_{b}SiO_{(4-a-b)/2} (I)
dans laquelle
R peut être identique ou différent et signifie un radical organique monovalent, exempt de liaisons carbone-carbone multiples aliphatiques,
R¹ peut être identique ou différent et signifie un radical hydrocarboné monovalent, le cas échéant substitué, lie par SiC comprenant une liaison carbone-carbone multiple aliphatique,
a est égal à 0, 1, 2 ou 3 et
b est égal à 0, 1 ou 2,
à condition que la somme de a + b soit inférieure
ou égale à 3 et qu'au moins 2 radicaux R¹ par molécule soient présents.

4. Masses d'organopolysiloxanes durcissables selon l'une ou plusieurs des revendications 1 à 3, **caractérisées en ce qu'**il s'agit pour le radical R d'un radical hydrocarboné monovalent, exempt de liaisons carbone-carbone multiples aliphatiques, lié par SiC comprenant 1 à 6 atomes de carbone.

5. Masses d'organopolysiloxanes durcissables selon l'une ou plusieurs des revendications 1 à 4, **caractérisées en ce qu'**on utilise comme organopolysiloxanes (B) des organopolysiloxanes linéaires, cycliques ou ramifiés constitués d'unités de formule
R_{c}H_{d}SiO_{(4-c-d)/2} (II)
dans laquelle
R peut être identique ou différent et a la signification indiquée ci-dessus,
c est égal à 0, 1, 2 ou 3 et
d est égal à 0, 1 ou 2,
à condition que la somme de c + d soit inférieure
ou égale à 3 et qu'au moins deux atomes d'hydrogène liés par Si par molécule soient présents.

6. Masses d'organopolysiloxanes durcissables selon l'une ou plusieurs des revendications 1 à 5, **caractérisées en ce qu'**on utilise comme catalyseur (D) des complexes de bis(alcynyl)(1,5-cyclooctadiène)platine, de bis(alcynyl)(bicyclo[2.2.1]hepta-2,5-diène)platine, de bis(alcynyl)(1,5-diméthyl-1,5-cyclooctadiène)platine et de bis(alcynyl)(1,6-diméthyl-1,5-cyclooctadiène)platine.

7. Complexes de platine de formule (III).

8. Complexes de platine constitués d'unités de structure des formules (V) et le cas échéant (VI).

9. Complexes de platine selon les revendications 7 ou 8, **caractérisés en ce que** R² a la signification d'un diène cyclique comprenant 6 à 28 atomes de carbone.

10. Corps moulés fabriqués par réticulation des masses selon l'invention selon l'une ou plusieurs des revendications 1 à 6.
